# EUROPÄISCHE PATENTSCHRIFT

(11) **EP 2 224 077 B1**
(45) Veröffentlichungstag und Bekanntmachung des Hinweises auf die Patenterteilung: **05.11.2014**
(21) Anmeldenummer: 10152765.3
(22) Anmeldetag: 05.02.2010
(51) Int. Cl.: E04H 4/12, C02F 103/42

(54) **Skimmer**
Skimmer
Dispositif d'écumage

(30) Priorität: 11.02.2009 CH 2092009
(43) Veröffentlichungstag der Anmeldung: 01.09.2010
(73) Patentinhaber: Natural Blue GmbH, 6340 Baar (CH)
(72) Erfinder: Scheuter, Beat, 3123, Belp (CH); Mikula, Judith, 8500, Frauenfeld (CH)

(56) Entgegenhaltungen:
- EP-A- 1 632 622
- US-A- 5 078 863
- US-A- 5 830 350
- US-A1- 2008 282 459
- US-B1- 6 643 879

## Beschreibung

Die Erfindung betrifft einen Skimmer. Die Erfindung betrifft insbesondere einen Kiesskimmer und einen Wandskimmer. Die Erfindung betrifft auch ein Verfahren zum Betreiben eines Skimmers. Skimmer sind im Wasser eines Wasserbeckens angeordnete Geräte, durch die Wasser aus dem Wasserbecken abgesaugt wird, das insbesondere nach einer Aufbereitung dem Wasserbecken wieder zugespiesen wird. Sie müssen gewartet werden, damit der Pumpenkreislauf ordnungsgemäss funktioniert.

Aus der Offenlegungsschrift US 2008/0282459 A1 ist ein Wasseraufbereitungssystem bekannt, das ein Gehäuse mit darin angeordnetem Filter aufweist, wobei das Gehäuse vollständig in der Wandung eines Wasserbeckens versenkt ist. An der kopfseitigen Öffnung des Gehäuses ist ein zweiteiliger Skimmer vorgesehen, dessen unterer Teil mit dem Gehäuse verbunden ist. Der obere Teil des Skimmers wird teleskopierbar vom unteren Teil umfasst und ist vertikal beweglich, was eine Anpassung an die Höhe des Wasserspiegels ermöglicht. Beim genannten Wasseraufbereitungssystem muss der Skimmer über Befestigungsmittel am Gehäuse befestigt sein. Dies hat zur Folge, dass der Zugang zum Filter und damit dessen Reinigung erschwert ist. Die US-Patentschrift mit der Nummer 5,078,863 offenbart einen Skimmer, der ein Gehäuse aufweist, in welches ein Filter eingebracht werden kann. Das gesamte Gehäuse ist so ausgestaltet, dass es schwimmt. Zu diesem Zweck weist es im oberen Bereich als integralen Teil einen Ring mit Kammern auf, in welche Material geringer Dichte gefüllt werden kann. Des Weiteren ist ein Deckel mit einem Dach und langen vertikalen Wänden vorgesehen, der die Wartungsöffnung für den Filter am oberen Teil des Gehäuses verschliesst. Die vertikalen Wände werden beim Aufsetzen des Deckels in den Filterraum eingeführt und verhindern dort den horizontalen Wasserfluss. Die Oberflächenabsaugung erfolgt, wie seit mehreren Jahrzehnten üblich, über eine bewegliche Klappe.

Die Aufgabe der vorliegenden Erfindung besteht darin, einen Skimmer für Wasserbecken, insbesondere Schwimmbecken oder Pools zu schaffen und ein Verfahren vorzuschlagen, das die Wartung des Skimmers, bzw. eines an den Skimmer angeschlossenen Pumpenkreislaufs vereinfacht. Die Vorteile der einzelnen Merkmale des erfindungsgemässen Skimmers und des Verfahrens gehen aus der nachfolgenden Beschreibung der Erfindung hervor.

Die Aufgabe wird durch den Anspruch 1 gelöst. Vorteilhafte Ausführungsformen sind in den abhängigen Ansprüchen definiert und in der Figurenbeschreibung näher beschrieben.

Ein erfindungsgemässer Skimmer besitzt einen Filterraum und einen im Filterraum eingesetzten Filtereinsatz. Weiter weist er eine über den Filterraum gesteckte, schwimmende Haube auf. An der Haube ist ein Wasserüberlaufkragen ausgebildet. Am Skimmer ist ein Rohranschluss zum Anschliessen einer Pumpenleitung einer Absaugpumpe an den Filterraum ausgebildet. Diese Skimmerkonstruktion ist für Wandskimmer wie auch für Kiesskimmer geeignet.

Im Gegensatz zur Variante aus der oben genannten US 5,078,863 muss durch die Verwendung einer schwimmenden Haube als Oberflächenabsauger mit Wasserüberlaufkragen nicht die gesamte Apparatur schwimmen.

Da erfindungsgemäss der schwimmende Teil als über den Filterraum gesteckte Haube ausgebildet ist und so vom Filterraum auch ohne die Verwendung von Befestigungsmitteln in Position gehalten werden kann, wird die Wartung gegenüber einer Anordnung, wie sie aus der US 2008/0282459 A1 bekannt ist, erleichtert. Denn die Haube kann in vorteilhafter Weise, ohne irgendwelche Befestigungsmittel lösen zu müssen, abgenommen werden, wodurch der gesamte Filter zugänglich wird.

Eine erste Ausführungsform der Erfindung ist mit wenigstens einem elektrischen Schalter ausgerüstet, der im Skimmer angeordnet ist. Dieser Schalter ist durch ein bewegliches Teil des Skimmers, insbesondere die Haube und/ oder den Filtereinsatz betätigbar. Dadurch lässt sich der Betrieb eines mit dem Skimmer ausgerüstetes Wasserbeckens regeln und/ oder der Betrieb der Umwälzpumpe kontrollieren.

Ist der Schalter ein durch den Filtereinsatz betätigbarer erster Schalter, so hat dies den Vorteil, dass dieser durch das Entfernen des Filtereinsatzes ausgeschaltet und durch das Einsetzen des Filterseinsatzes in den Filterraum eingeschaltet wird und daher durch das Entfernen bzw. Einsetzen des Filtereinsatzes eine Ansaugpumpe damit geschaltet werden kann. Dadurch wird vermieden, dass im Bereich des Filters angesammeltes Laub oder sich befindliche Tiere in die Pumpenleitung geraten. Dadurch können Betriebsstörungen der Umwälzpumpe und der Wasseraufbereitungsanlagen vermieden werden.

Ist der Schalter ein durch die Haube betätigbarer zweiter Schalter, so hat dies den Vorteil, dass dieser in einer untersten Position der Haube einschaltet, so dass mit der Haube als mit dem Wasserstand sich bewegendem Schwimmkörper eine Wasserzufuhr eingeschaltet und wieder ausgeschaltet werden kann. Eine Ausschaltung kann auch nach einer bestimmten Zeit oder einem bestimmten Volumen an zugeführtem Wasser erfolgen.

In beiden Ausführungsformen kann der Schalter ein Impulsschalter sein, mit dem ein externer Schalter angesteuert werden kann.

Vorteilhaft besitzt die Haube eine äussere Haubenwandung, die den Filterraum umfasst, und weist sie an diese Haubenwandung dicht anschliessend ein Haubendach auf. Im Haubendach ist eine in den Filter sich öffnende Wasseröffnung ausgebildet. Eine solche Ausbildung ermöglicht es, die Haube als Schwimmer zu nutzen, der einen Schalter betätigt. Sie erlaubt, verschiedene Hauben auszubilden, die für verschiedene Wassermengen geeignet sind. Weiter kann die Haube als einfaches Spritzgussteil hergestellt werden.

Zweckmässigerweise ist ein Wasserüberlaufkragen durch eine über einen Auftriebsraum der Haube hinaufstehende Wandung gebildet. Die Länge dieses Wasserüberlaufkragens muss auf die Pumpenleistung der an den Skimmer angeschlossenen oder anzuschliessenden Umwälzpumpe abgestimmt sein.

Es ist ein Vorteil dieser Ausbildung der Haube, dass über den selben Filterraum Hauben mit unterschiedlich langen Wasserüberlaufkragen aufgesetzt werden können, so dass ein Skimmer durch die Wahl der geeigneten Haube auf die Pumpenleistung abgestimmt werden kann. Daher ist die Haube eines solchen Skimmers aus einer Mehrzahl von Hauben auswählbar, bei denen die Länge des Wasserüberlaufkragens unterschiedlich dimensioniert ist.

Zweckmässigerweise ist bei einer Haube dieser Auswahl von Hauben, welche den längsten Wasserüberlaufkragen aufweist, eine über einen Auftriebsraum hinaufstehende Wandung in Verlängerung der Haubenwandung ausgebildet. Freilich könnte das Haubendach auch über die Haubenwandung hinaus auskragen und der Wasserüberlaufkragen am Umfang des Haubendaches ausgebildet sein.

Zweckmässigerweise bildet bei einer Haube dieser Auswahl, die den kürzesten Wasserüberlaufkragen aufweist, eine über den Auftriebsraum hinaufstehende Wandung den Rand der Wasseröffnung.

In einer bevorzugten Ausführung ist zwischen dem Rohranschluss und dem Filterraum eine gelochte Wandung ausgebildet. Diese Wandung stellt sicher, dass eine Vielzahl von Löchern abgedeckt werden müssen, um ein Ansaugen von Wasser zu verhindern. Daher ist die Wahrscheinlichkeit eines Verschlusses aller Löcher sehr gering. Dies dient der Sicherheit, insbesondere der Sicherheit gegen das Ansaugen einer in unerlaubter Weise in den Filterraum gestreckten Kinderhand.

Die Löcher in der Wandung sind mit Vorteil derart angeordnet, dass lediglich ein Teil der Löcher durch eine Kinderhand abgedeckt werden können. Dies wird insbesondere dadurch erreicht, dass die Löcher über eine Fläche der gelochten Wandung verteilt angeordnet sind, die wenigstens in einer Dimension grösser als eine Kinderhand ist. Diese Dimension soll insbesondere grösser als 20 cm ist, vorzugsweise grösser als 25 cm sein. Damit ist es unmöglich, mit einer einzigen Kinderhand alle Löcher abzudecken. Dies verhindert, dass ein Kind durch die Ansaugpumpe angesogen sich nicht mehr vom Skimmer lösen kann.

In einer vorteilhaften Ausführung ist die gelochte Wandung zwischen zwei getrennten Lochbereichen wenigstens einmal abgewinkelt. Dadurch wird es möglich, die Wandung kleiner zu machen als eine ebene Wandung, da ein Kind auf mit der Handfläche auf der einen Seite der Abwinkelung auf der anderen lediglich den Daumen hat und mit diesem nur einen sehr geringen Bereich abzudecken vermag.

Wenn er in einer wichtigen Ausführungsform mit einem Kiesteller ausgerüstet sein kann, so ist der oben angeführte Skimmer dennoch auch als Wandskimmer ausbildbar. Bei einem Wandskimmer ist der Filterraum mit dem Filtereinsatz und die darüber gesteckte Haube innerhalb eines Skimmerraumes eines in einer Bassinwandung anordnenbaren Wandkastens angeordnet. Der Wandkasten besitzt ein in einer Seitenwandung ausgebildetes Einlauffenster. Dadurch ist erreicht, dass die selben Teile, das ist der Filtereinsatz und die Skimmerhaube, sowohl für einen Kieskimmer als auch für einen Wandskimmer genutzt werden können. Dadurch ist eine Produktevielfalt mit wenigen Produkteteilen verwirklicht.

Der Wandskimmer ist aus einbautechnischen Gründen praktischer, wenn sein den Skimmerraum bildender Wandkasten im Wesentlichen kubisch ausgebildet ist. Zudem soll eine mit einer Oberfläche der Bassinwandung etwa bündig anordnenbare Einlaufwandung vorhanden sein, in der das Einlauffenster ausgebildet ist. Dadurch lässt sich der Wandskimmer in einer Bassinwandung sehr leicht einbauen.

Dieser Wandskimmer besitzt vorteilhaft einen Ausstiegsraum für Amphibien. Der Boden des Ausstiegsraums ist zur Schaffung eines bei jedem Wasserspiegel idealen Ausstiegs als eine Rampe ausgebildet, die von einem Niveau im Bereich eines tiefstmöglichen Wasserspiegels im Wandkasten bis zu einer Ausstiegsöffnung über einem normalen Wasserspiegel ansteigt. Durch diese Ausstiegsöffnung können die Amphibien den Ausstiegsraum verlassen.

Zweckmässigerweise ist anschliessend an die Ausstiegsöffnung ein vertiefter Bereich ausgebildet ist, damit beispielsweise der diesen Ausstieg nutzende Frosch nicht wieder zurück auf die Rampe springt, sondern einen anderen Ausweg sucht.

Im Boden dieses vertieften Bereichs ist mit Vorteil ein Ablauf in eine Überlaufleitung ausgebildet. In diesem Fall bildet die Ausstiegsöffnung eine Überlaufkante aus. Diese Überlaufkante soll zweckmässigerweise etwa ein Zentimeter tiefer liegen als die Einlaufkante des Einlauffensters im Wandkasten. Der vertiefte Bereich könnte auch oben offen sein. Er ist aber zweckmässigerweise in einer Kammer ausgebildet, in der eine Austrittsöffnung, vorzugsweise mit einem Anschlussstutzen für einen Austrittkanal, ausgebildet ist, durch welche ein Amphibium die Kammer verlassen kann. An den Anschlussstutzen kann ein Austrittkanal angeschlossen werden, mit dem beispielsweise ein Plattenbelag neben dem Pool untertunnelt ist, so dass der ausgestiegene Frosch neben dem mit Platten belegten Bereich ins Freie kommt.

Im Wandkasten ist zweckmässigerweise unter dem Skimmerraum ein Ansaugraum ausgebildet, der mit einem Rohranschluss für ein Pumpenrohr versehen ist. Zwischen dem Filterraum und dem Ansaugraum kann eine gelochte Wandung ausgebildet sein, um, wie oben beschrieben, einen Kinderschutz zu gewährleisten.

Wenn auf wenigsten drei Seiten des Wandkastens ein Flansch ausgebildet ist, kann dieser zur Befestigung des Wandkastens in einer Aussparung in einer Bassinwandung genutzt werden.

Der Skimmerraum eines Wandskimmers ist mit Vorteil abgedeckt. Eine eine Abdeckung des Skimmerraums aus einem transparenten Material ermögllicht es, eine Kontrolle des Skimmers vorzunehmen, ohne diese Abdeckung anzuheben. Dies begünstigt eine fachgerechte Wartung des Skimmers, denn was aus den Augen ist, ist meist auch aus dem Sinn. Die Einsicht in den Skimmerraum aber erleichtert es dem Betreiber des Pools, den Skimmer rechtzeitig zu reinigen und begünstigt damit eine optimale Wartung.

Die Bauweise des Skimmers ermöglicht verschiedene vorteilhafte Verfahren zu dessen Betrieb. Mit dem Skimmer kann unter anderem ein Verfahren mit den folgenden Schritten durchgeführt werden:
a) Ansaugen von Wasser durch einen Filter hindurch mittels einer Pumpe
b) Abstellen der Pumpe zum Reinigen des Filters
c) Reinigen des Filters, Vorteilhaft wirkt sich bei einem solchen Verfahren aus, wenn
d) durch das Entnehmen des Filters die Pumpe abgestellt wird. Dadurch wird die Pumpe vor dem Ansaugen von Laub oder Tieren bewahrt und die den Skimmer wartende Person braucht sich nicht darum zu kümmern, ob die Pumpe läuft oder nicht. Es werden ihr auch zwei Gänge zur Pumpe erspart, nämlich zum Ausschalten vor dem Filter Reinigen und zum einschalten danach. Es wird dadurch auch verhütet, dass die Pumpe nach der Filterreinigung versehentlich nicht wieder eingeschaltet wird, was für den Pool verheerende Auswirkungen haben könnte.

Vorteilhaft wird dies erreicht, indem beim Entnehmen des Filters ein im Skimmer angeordneter Schalter betätigt wird. Zweckmässigerweise wird, wie erwähnt, die Pumpe beim Einsetzen des Filters wieder zugeschaltet.

Unabhängig oder abhängig davon wird auch ein Verfahren zum Betreiben des Skimmers ermöglicht, bei dem folgende Schritte durchgeführt werden:
a) Ansaugen von Wasser durch einen Filter hindurch mittels einer Pumpe
b) Abstellen der Pumpe zum Reinigen des Filters
c) Reinigen des Filters,
   wobei
d) die Pumpe intermittierend betrieben wird. Der Intermittierende Betrieb der Pumpe hat den Vorteil, dass in den Skimmer geratene Amphibien in den Pumppausen diesen verlassen können und daher nicht zugrunde gehen müssen. Dies bestimmt auch die Dauer der Intervalle für das Betrieben der Pumpe und das Stoppen der Pumpe.

Weiter wird unabhängig oder abhängig von den oben beschriebenen Verfahren ein erfindungsgemässes Verfahren zum Betreiben des Skimmers beschrieben, bei dem folgende Schritte durchgeführt werden:
a) Ansaugen von Wasser durch einen Filter hindurch mittels einer Pumpe
b) Abstellen der Pumpe zum Reinigen des Filters
c) Reinigen des Filters,
   und schliesslich
d) beim Erreichen eines tiefen Wasserstands durch eine schwimmende Haube des Skimmers eine Wasserzuführung ausgelöst wird. Anders ausgedrückt wird die Skimmerhaube als Schwimmer einer Pegelstandmessung genutzt und betätigt eine Nachfüllautomatik zum Nachfüllen eines Pools mit geringem Wasserstand.

Die Wasserzuführung kann gestoppt werden, indem die Schwimmerhaube wieder angehoben wird, oder nach dem Zuführen von Wasser über eine voreingestellte Zeitspanne, oder nach dem Einspeisen einer voreingestellten Wassermenge.

Kurzbeschreibung der Figuren:
- Fig. 1: zeigt eine perspektivische Darstellung eines Basisteils eines Kiesskimmers.
- Fig. 2: zeigt das in Figur 1 dargestellte Basisteil mit darin eingelegter Filtereinlage.
- Fig. 3: zeigt die aus dem Filterraum herausgenommen Filtereinlage.
- Fig. 4: zeigt den mit einer Haube ausgerüsteten Skimmer gemäss den Figuren 1 bis 3 in einer perspektivischen Aufsicht.
- Fig. 5: zeigt den Skimmer von Figur 4 in einer perspektivischen Seitenansicht, jedoch mit einem kurzen Wasserüberlaufkragen.

- Fig. 6: zeigt den Skimmer von Figur 4 in einer perspektivischen Seitenansicht mit dem in Figur 4 gezeigten langen Wasserüberlaufkragen.
- Fig. 7: zeigt schematisch einen Querschnitt durch eine Skimmerhaube mit langem Wasserüberlaufkragen.
- Fig. 8: zeigt einen Wandskimmer in einem schematischen Querschnitt.

### Beispiele:

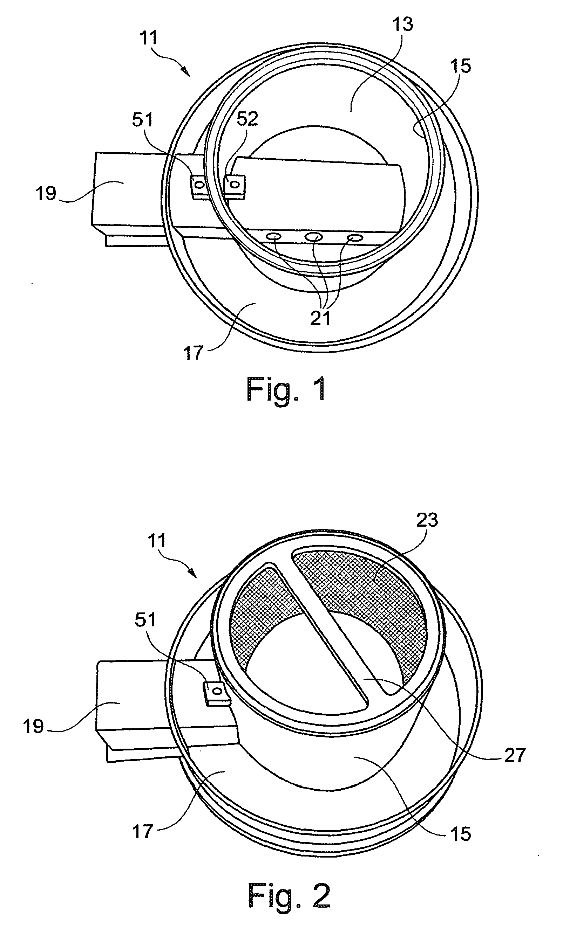

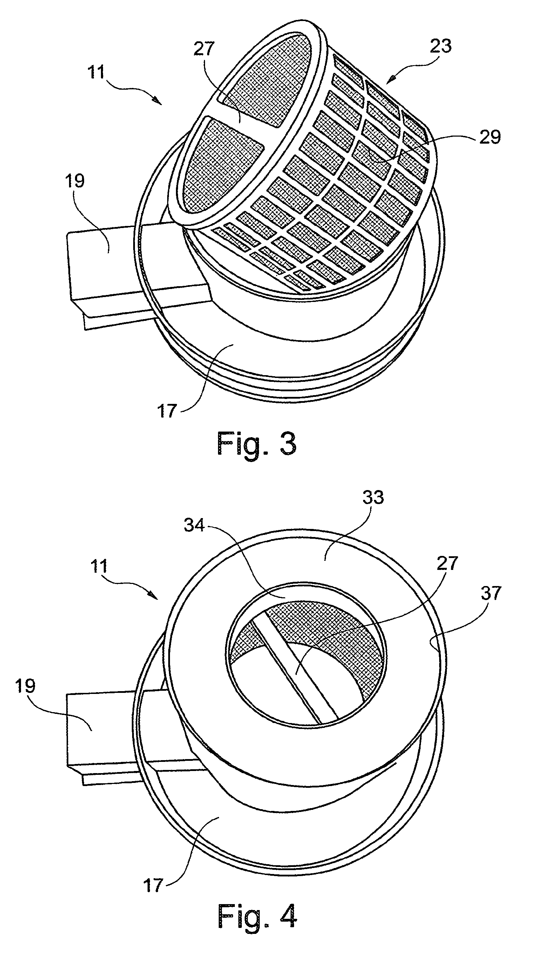

Der in den Figuren 1 bis 6 dargestellte Kiesskimmer 11 ist geeignet für Bioschwimmbadanlagen und Badeteiche. Er besitzt einen verstärkten Boden mit einer Auffangschale 17. Zur Stabilisierung des Simmers 11 wird die Auffangschale mit Kies gefüllt. Der Skimmer 11 wird auf einer geeigneten Höhe auf den Grund des Badeteichs gestellt und an einen Saugschlauch angeschlossen. Im Skimmer ist im Bereich der Auffangschale ein Kanal 19 ausgebildet, durch den das Wasser aus dem Filterraum 13 abgesaugt wird. Der Kanal ist dazu innerhalb des Filterraums mit seitlich angeordneten Ansauglöchern 21 unterschiedlicher Grösse versehen. Der Kanal 19 verläuft konisch sich aufweitend von seinem ersten Ende zu dem diesem ersten Ende gegenüberliegenden Anschluss für den Saugschlauch. Dank der asymmetrischen Ausbildung des Ansaugkanals wird eine gleichmässige Ansaugung erreicht.
Dank der Distanz zwischen den auf zwei Seiten des Kanals angeordneten Öffnungen und der Anordnung dieser Öffnungen auf den beiden Seiten ist ein guter Unfallschutz und Verletzungsschutz gewährleistet.

Zum einfachen und raschen Anschliessen einer Ansaugleitung an den Ansaugkanal 19 ist an diesem ein Schnellverschluss ausgebildet.

Auf der Aussenseite der den Filterraum 13 umschliessenden Filterraumwandung 15 ist ein Schalter 51 für automatische Niveauregelung integriert. Dieser kann als mechanisch oder elektronisch auszulösender Schalter ausgebildet sein. Er wird ausgelöst durch den Skimmerschwimmer, das ist die Haube 31, und betätigt ein externes Magnetventil, so dass durch eine Wasserleitung Wasser dem Badeteich zugeführt wird.

Weiter ist auf im Filterraum 13 ein Schalter 52 vorhanden, der für automatische Abschaltung der Umwälzpumpe gedacht ist. Er wird bei Entnahme Skimmer-Schmutzkorbes, das ist der Filtereinsatz 23, ausgelöst

Im Skimmer 11 kann eine Beschriftung integriert sein, die durch LED beleuchtet oder mit fluoreszierendem Material ausgeführt ist.

Wenn die Saugkante des Skimmer-Schwimmers, das ist der Wasserüberlaufkragen 37, im 45° Winkel ausgebildet ist, dient das der Erhöhung der Oberflächensaugleistung.

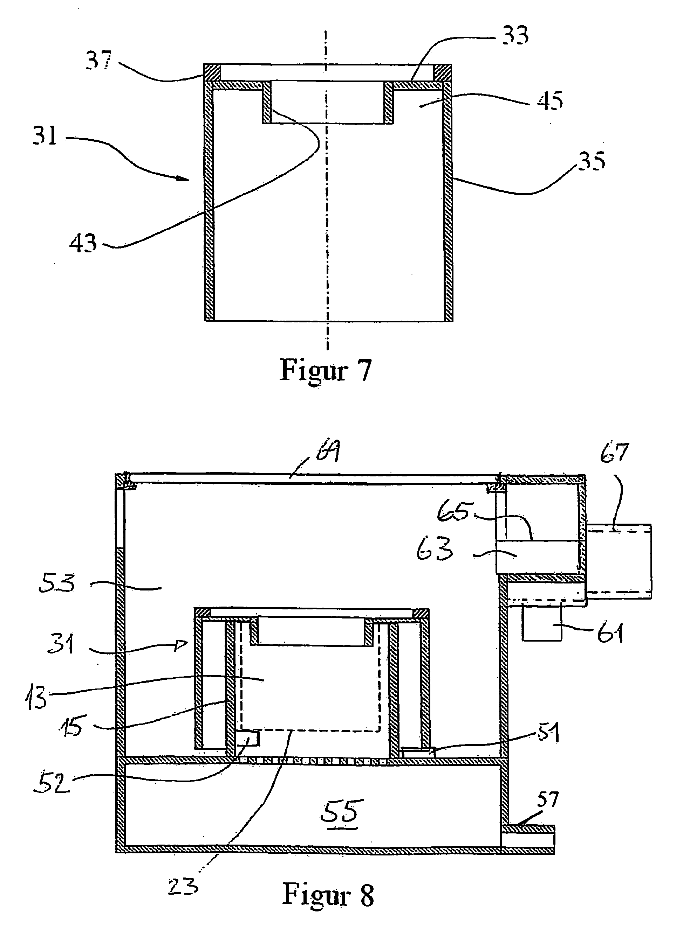

In der Figur 7 ist eine Haube 31 im Schnitt dargestellt. Sie besitzt eine kreiszylindrische Haubenwand 35, an die oben eine Haubendach 33 mit zentraler Öffnung 34 anschliesst. Die Öffnung ist durch eine kreiszylindrische Luftkissenwand 43 gebildet. Zwischen der Luftkissenwand 43, der Haubenwand 35, dem Haubendach 33 und dem im Filterraum vorliegenden Wasser ist ein Luftkissenraum 45 eingeschlossen. Die darin gefangene Luft bildet einen Auftrieb für die Haube 31, damit diese schwimmt.

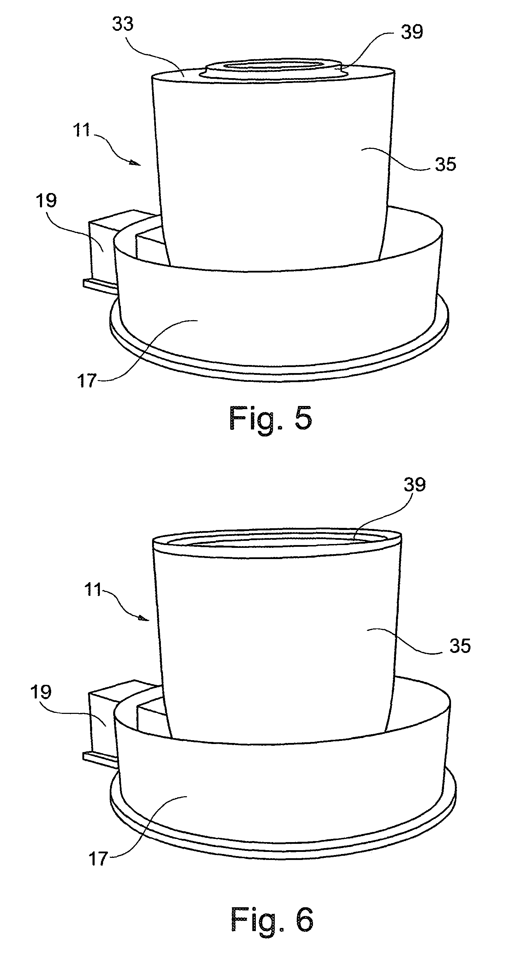

Wie aus Figuren 5 und 6 ersichtlich ist, gibt es zwei verschiedene SkimmerSchwimmer 31. Diese sind auf die unterschiedliche Ansaugleistung der angeschlossenen Pumpen ausgelegt. Eine hohe Saugleistung braucht eine lange Saugkante 39 (Figuren 6 und 7), eine kleine Pumpenleistung braucht eine kurze Saugkante 37 (Fig. 5). Die Saugkante liegt über einem Haubendach 33 und kann dort einen beliebigen Umfang haben. Der grösstmögliche Umfang liegt auf dem Aussenumfang des Haubendaches 33. Der kleinstmögliche Umfang liegt auf dem Aussenumfang der Öffnung im Haubendach 33.

Der Skimmer-Schmutzkorb oder Filtereinsatz 23 ist mit einem geschlossenem Boden ausgebildet, was dem Amphibienschutz dient.

Der Skimmer-Schmutzkorb oder Filtereinsatz 23 ist mit einem Chromstahlnetz in einer als Verstärkung dienenden, mit Filterfenstern ausgebildeten Kunststoffumhüllung 29 ausgebildet. Die Kunststoffumhüllung 29 ist mit einem Griff 27 ausgebildet.

Ein weitgehend identisch gebauter Skimmer kann auch als Wandskimmer genutzt werden. Der in Figur 8 schematisch dargestellte Wandskimmer besitzt eine Wandkammer 53 mit einem von einer Filterraumwandung 15 umschlossenen Filterraum 13 und einer darüber gesteckten Haube 31, bei denen Filtereinsatz 23 und Haube 31 identisch mit den entsprechenden Teilen des Kiesskimmers ausgebildet sind. Auch bei diesem Skimmer sind Schalter 51 und 52 ausgebildet, die zum Schalten von Umwälzpumpe und Wasserzuführung dienen.

Die Wandkammer 53 ist über einer Ansaugkammer 55 mit Saugleitungsanschluss 57 ausgebildet. Der Boden 59 des Filterraums besitzt Öffnungen, die den Filterraum 13 mit dem Ansaugraum 55 verbinden. Da der Filterraum einen Durchmesser von etwa 30 cm aufweist, ist gewährleistet, dass die Lochung im Boden nicht mit einer Kinderhand gänzlich abgedeckt werden kann und daher ein versehentlich hineingreifendes Kind sich auch bei laufender Pumpe wieder lösen kann.

Anschliessend an die Wandkammer ist ein Notüberlauf ausgebildet. Der Abflusskanal 61 des Notüberlaufs ist in einer für Amphibien zugänglichen Kammer ausgebildet und mit Schutzgitter für den Schutz der Amphibien abgedeckt. Der Notüberlauf ist als Fluchtausstieg für die Amphibien ausgebildet, da er mit einer geriffelte, geneigten Aufstiegshilfe in Form einer Rampe 63 ausgebildet ist. An diese Rampe 63 schliesst sich jenseits einer Überlaufkante 65 eine vertiefte Kammer an, aus der ein beliebig verlängerbarer Fluchtkanal 67 führt.

Zur Einsichtnahme in die Wandkammer 53 und auf den eigentlichen Skimmer, das heisst die Haube 31 und den Filtereinsatz 23, ist auf der Wandkamme eine transparente Abdeckung 69 aus schlagfestem, UV-beständigem und rutschfestem Kunststoff angeordnet.

Eine solche Ausbildung des Wandskimmers erlaubt eine gegenüber herkömmlichen Wandskimmern höhere variable Wasserstandsfunktion. Im gegebenen Fall sind es 14 cm.

Zum Betreiben eines solchen Skimmers ist eine Pumpe notwendig. Diese Pumpe kann in einem Pumpenschacht angeordnet sein, was bei Bioschwimmbadanlagen und Badeteiche sicher am zweckmässigsten ist. Ein solcher Pumpenschacht hat vorteilhaft folgende Eigenschaften:
Variable Verrohrung zum Einsatz unterschiedlicher Pumpengrössen und Pumpentypen.
Gesamte Verrohrung ist demontierbar mittels Verschraubungen an den Pumpenwandanschlüssen.
Vormontierte Schwingungsdämpfer.
Verrohrungssystem mit variablem Einsatz von manuellen oder für den automatischen Betrieb motorisch angetriebenen Kugelhähnen.
Integrierter Durchflussmesser in der Filterbeschickungsleitung austauschbar mit Manometerzwischenstück.
Integrierte und verschweisste Verschraubungen in der Pumpenschachtwand als Anschluss aller Leitungsanschlüsse an das Verrohrungssystem.
Transparentes Rückspülrohr zur Kontrolle der Rückspülung / Belüftung. Integrierte Schachtbelüftung mit schalldämpfendem Einsatz und längs zirkulierendem Belüftungskanal Diagonal in der Schachtecke platziert.
Schachtentwässerung ist bereits im Schacht integriert.
Wasserdichter Elektroanschluss.
Schachtbeleuchtung.
Beschriftung beleuchtet durch LED oder ausgeführt mit fluoreszierendem Material.
Transparente Abdeckung aus schlagfestem, UV-beständigem und rutschfestem Kunststoff zur Sichtkontrolle der eingebauten Messgeräte wie Durchflussmesser Dosieranlagen etc.

## Patentansprüche

1. Skimmer mit einem in einen Filterraum (13) eingesetzten Filtereinsatz (23) und mit einem Rohranschluss (57) zum Anschliessen einer Pumpenleitung einer Absaugpumpe an den Filterraum (13), **gekennzeichnet durch** eine über den Filterraum (13) gesteckte, schwimmende Haube (31), welche Haube (31) einen Wasserüberlaufkragen (37) aufweist.

2. Skimmer nach Anspruch 1, **dadurch gekennzeichnet, dass** wenigstens ein elektrischer Schalter (51, 52) im Skimmer (11) vorhanden ist, der durch ein bewegliches Teil des Skimmers (11), insbesondere die Haube (31) und/oder den Filtereinsatz (23) betätigbar ist.

3. Skimmer nach Anspruch 2, **dadurch gekennzeichnet, dass** der Schalter ein durch den Filtereinsatz (23) betätigbarer Schalter (52) ist, der durch das Entfernen des Filtereinsatzes (23) ausgeschaltet und durch das Einsetzen des Filterseinsatzes in den Filterraum (13) eingeschaltet wird, so dass eine Ansaugpumpe damit geschaltet werden kann.

4. Skimmer nach Anspruch 2, **dadurch gekennzeichnet, dass** der Schalter ein durch die Haube (31) betätigbarer Schalter (51) ist, der in einer untersten Position der Haube (31) eingeschaltet wird, so dass damit eine Wasserzufuhr eingeschaltet werden kann, wobei vorzugsweise zusätzlich ein durch den Filtereinsatz (23) betätigbarer Schalter (52) vorgesehen ist, der durch das Entfernen des Filtereinsatzes (23) ausgeschaltet und durch das Einsetzen des Filterseinsatzes in den Filterraum (13) eingeschaltet wird, so dass eine Ansaugpumpe damit geschaltet werden kann.

5. Skimmer nach einem der Ansprüche 1 bis 4, **dadurch gekennzeichnet, dass** die Haube (31) eine äussere Haubenwandung (35) besitzt, die den Filterraum (13) umfasst, und an diese Haubenwandung (35) dicht anschliessend ein Haubendach (33) aufweist, in welchem Haubendach (33) eine in den Filterraum (13) sich öffnende Wasseröffnung (34) ausgebildet ist.

6. Skimmer nach einem der Ansprüche 1 bis 5, **dadurch gekennzeichnet, dass** der Wasserüberlaufkragen (37) durch eine über einen Auftriebsraum der Haube (31) hinaufstehende Wandung gebildet ist.

7. Skimmer nach einem der vorangehenden Ansprüche, **dadurch gekennzeichnet, dass** zwischen dem Rohranschluss (57) und dem Filterraum (13) eine gelochte Wandung ausgebildet ist, wobei die gelochte Wandung zwischen zwei getrennten Lochbereichen vorzugsweise wenigstens einmal abgewinkelt ist.

8. Skimmer nach einem der vorangehenden Ansprüche, **dadurch gekennzeichnet, dass** der Filterraum (13) mit dem Filtereinsatz (23) und die darüber gesteckte Haube (31) innerhalb eines Skimmerraumes eines in einer Bassinwandung anordnenbaren Wandkastens (53) mit einem in einer Seitenwandung ausgebildeten Einlauffenster angeordnet sind.

9. Skimmer nach Anspruch 8, **dadurch gekennzeichnet, dass** ein Ausstiegsraum für Amphibien ausgebildet ist, dessen Boden eine Rampe (63) bildet, die von einem Niveau im Bereich eines tiefstmöglichen Wasserspiegels im Wandkasten (53) bis zu einer Ausstiegsöffnung über einem normalen Wasserspiegel ansteigt, durch welche Ausstiegsöffnung die Amphibien den Ausstiegsraum verlassen können.

10. Skimmer nach Anspruch 9, **dadurch gekennzeichnet, dass** anschliessend an die Ausstiegsöffnung ein vertiefter Bereich ausgebildet ist, wobei es bevorzugt ist, dass im Boden des vertieften Bereichs ein Ablauf (61) in eine Überlaufleitung ausgebildet ist und die Ausstiegsöffnung eine Überlaufkante (65) bildet.

11. Skimmer nach Anspruch 10, **dadurch gekennzeichnet, dass** der vertiefte Bereich in einer Kammer ausgebildet ist, in der eine Austrittsöffnung, vorzugsweise mit einem Anschlussstutzen für einen Austrittkanal (67), ausgebildet ist, durch welche ein Amphibium die Kammer verlassen kann.

12. Skimmer nach einem der Ansprüche 8 bis 11, **dadurch gekennzeichnet, dass** der Wandkasten (53) unter dem Skimmerraum einen Ansaugraum (55) aufweist, der mit einem Rohranschluss (57) für ein Pumpenrohr ausgebildet ist, wobei zwischen dem Filterraum (13) und dem Ansaugraum (55) vorzugsweise eine gelochte Wandung ausgebildet ist.

13. Skimmer nach einem der Ansprüche 8 bis 12, **gekennzeichnet durch** eine Abdeckung des Skimmerraums aus einem transparenten Material.

14. Verfahren zum Betreiben eines Skimmers (11) gemäss einem der vorangehenden Ansprüche, bei dem folgende Schritte durchgeführt werden:
a) Ansaugen von Wasser durch einen Filtereinsatz (23) hindurch mittels einer Pumpe,
b) Abstellen der Pumpe zum Reinigen des Filtereinsatzes (23),
c) Reinigen des Filtereinsatzes (23),
**dadurch gekennzeichnet, dass**
d) beim Erreichen eines tiefen Wasserstands durch die schwimmende Haube (31) des Skimmers (11) eine Wasserzuführung ausgelöst wird.

15. Verfahren nach Anspruch 14, **dadurch gekennzeichnet, dass** die Wasserzuführung gestoppt wird, wenn die Schwimmerhaube (31) wieder angehoben wird, oder nach dem Zuführen von Wasser über eine voreingestellte Zeitspanne, oder nach dem Einspeisen einer voreingestellten Wassermenge.

## Claims

1. Skimmer with a filter unit (23) which is inserted into a filtration compartment / chamber (13) and with a pipe connection (57) to connect the pump line of a suction pump with the filtration compartment (13). The filtration compartment / chamber (13) is **characterized by** a swimming hood (31) that is stuck over the filtration compartment / chamber (13). The hood (31) features an overflow outlet structure / overflow chute (37).

2. Skimmer according to claim 1, **characterized by** the presence of at least one electrical switch (51, 52) in the skimmer (11). The switch (51, 52) can be activated by a mobile part of the skimmer (11), especially the hood (31) and / or the filter unit (23).

3. Skimmer according to claim 2, **characterized by** a switch (52) that is activated by the filter unit (23). By removing the filter unit (23), the switch is being inactivated and conversely, by inserting the filter unit (23) into the filtration compartment / chamber (13) the switch is being activated, so that a suction pump can be operated with it.

4. Skimmer according to claim 2, **characterized by** a switch (51) that is activated by the position of the hood (31). In the lowest position of the hood (31) the switch is activated, so that the water supply is turned on. Preferentially, in addition to this, there is a switch (52) that is activated by the filter unit (23). By removing the filter unit (23), the switch (52) is being inactivated and conversely, by inserting the filter unit (23) into the filtration compartment(13) the switch is being activated, so that a suction pump can be operated with it.

5. Skimmer according to claims 1- 4, **characterized by** the hood (31) having an external hood cladding (35) that spans the filtration compartment / chamber (13). The hood cladding (35) is closely connected with the hood cap (33) in which a water notch / opening (34) is inserted. The aforementioned water notch / opening (34) opens into the filtration compartment (13).

6. Skimmer according to claims 1- 5, **characterized by** the overflow outlet structure / chute (37) being composed of a cladding that stands above the flotation chamber of the hood (31).

7. Skimmer according to one the previous claims, **characterized by** the presence of a perforated cladding / wall between the pipe connection (57) and the filtration compartment (13).The perforated cladding / wall is at least once angulated between the two separate perforated zones.

8. Skimmer according to one of the previous claims, **characterized by** the filtration compartment (13) with the filter unit (23) and the above-standing hood (31) being placed in the skimmer chamber. The skimmer chamber is encased by a box (53) that is mounted to the pool wall. The aforementioned wall-mounted box (53) contains an inlet window that is located at a side wall.

9. Skimmer according to claim 8, **characterized by** the presence of an exit chamber for amphibians. The floor of the aforementioned chamber forms a ramp (63) that runs from the lowest possible water level of the wall-mounted box (53) to an exit opening above the standard water level, thus allowing amphibians to exit the exit chamber.

10. Skimmer according to claim 9, **characterized by** the presence of a deepened zone following the exit opening. Preferentially, a drain outlet (61) into an overflow pipe is set into the floor of the deepened zone. The exit opening forms an overflow edge (65).

11. Skimmer according to claim 10, **characterized by** the deepened zone being formed in a chamber in which an exit opening, preferentially with a pipe connection for a discharge duct is built, through which amphibians are able to exit the chamber.

12. Skimmer according to claims 8 - 11, **characterized by** the presence of an expansion chamber (55) underneath the wall-mounted box (53) of the skimmer chamber. The aforementioned expansion chamber (55) is equipped with a pipe connection (57) for a pump pipe. Preferentially, there is a perforated wall located between the filtration compartment / chamber (13) and the expansion chamber (55).

13. Skimmer according to claims 8-12, **characterized by** the skimmer chamber being covered with a transparent material.

14. Process to operate a skimmer (11) according to the previous claims, in which the following steps are to be executed:
a) suction of water through the filter unit (23) by means of a pump,
b) turning off the pump to clean the filter unit (23),
c) cleaning of the filter unit (23), **characterized by**
d) the activation of the water supply by the swimming hood (31) in case of low water levels.

15. Process according to claim 14, **characterized by** a halt to the water supply when the swimming hood (31) is being lifted, or when the feeding of water over a predefined time frame has been reached, or when a predefined amount of water has been fed.

## Revendications

1. Dispositif d'écumage avec un filtre (23) monté dans un compartiment à filtre (13) et avec un raccord de tuyau (57) servant à raccorder une conduite de pompe d'aspiration au compartiment à filtre (13), **caractérisé par** un capot flottant (31) posé par-dessus le compartiment à filtre (13), lequel compartiment à filtre (31) présente un rebord de trop plein (37).

2. Dispositif d'écumage selon la revendication 1, **caractérisé en ce que** le dispositif d'écumage (11) est équipé d'au moins un interrupteur électrique (51, 52) actionné par une partie mobile du dispositif d'écumage (11), en particulier le capot (31) et/ou le filtre (23).

3. Dispositif d'écumage selon la revendication 2, **caractérisé en ce que** l'interrupteur est un interrupteur (52) actionné par le filtre (23), déclenché en enlevant le filtre (23) et enclenché en posant le filtre dans le compartiment à filtre (13), de telle sorte qu'une pompe d'aspiration puisse être actionnée.

4. Dispositif d'écumage selon la revendication 2, **caractérisé en ce que** l'interrupteur est un interrupteur (51) actionné par le capot (31), déclenché lorsque le capot (31) se trouve dans sa position inférieure, de telle sorte qu'une arrivée d'eau puisse être ainsi ouverte, sachant qu'il est prévu de préférence un interrupteur (52) supplémentaire actionné par le filtre (23) et lequel est déclenché en enlevant le filtre (23) et enclenché en posant le filtre dans le compartiment à filtre (13), de telle sorte qu'une pompe d'aspiration puisse être actionnée.

5. Dispositif d'écumage selon l'une des revendications 1 à 4, **caractérisé en ce que** le capot (31) possède une paroi extérieure (35) renfermant le compartiment à filtre (13) et un couvercle de capot (33) fixé de manière hermétique sur la paroi (35), couvercle de capot (33) possédant une arrivée d'eau (34) débouchant dans le compartiment à filtre (13).

6. Dispositif d'écumage selon l'une des revendications 1 à 5, **caractérisé en ce que** le rebord de trop plein (37) est formé par une paroi située sur le dessus d'un compartiment flottant du capot (31).

7. Dispositif d'écumage selon l'une des revendications précédentes, **caractérisé en ce qu'**une paroi perforée est prévue entre le raccord de tuyau (57) et le compartiment à filtre (13), sachant que la paroi perforée est coudée de préférence au moins une fois entre deux zones perforées distinctes.

8. Dispositif d'écumage selon l'une des revendications précédentes, caractérisé en ce le compartiment à filtre (13) avec le filtre (23) et le capot (31) posé dessus sont disposés à l'intérieur d'un compartiment de dispositif d'écumage d'un caisson mural (53) pouvant être placé dans une paroi de bassin avec une fenêtre d'entrée formée dans une paroi latérale.

9. Dispositif d'écumage selon la revendication 8, **caractérisé en ce qu'**il est prévu un compartiment de sortie pour amphibiens dont le fond forme une rampe (63) qui monte d'un niveau d'eau aussi bas que possible dans le caisson mural (53) jusqu'à une ouverture de sortie par le biais d'un niveau d'eau normal, ouverture de sortie par laquelle les amphibiens peuvent quitter le compartiment de sortie.

10. Dispositif d'écumage selon la revendication 9, **caractérisé en ce qu'**est formé un enfoncement mitoyen à l'ouverture de sortie, sachant que de préférence, une évacuation (61) est prévue dans une conduite de trop plein dans le fond de l'enfoncement et que l'ouverture de sortie présente un rebord de trop plein (65).

11. Dispositif d'écumage selon la revendication 10, **caractérisé en ce que** l'enfoncement est formé dans une chambre dans laquelle il est prévu une ouverture de sortie, de préférence avec un embout de raccordement pour un canal de sortie (67), par laquelle un amphibien peut quitter la chambre.

12. Dispositif d'écumage selon l'une des revendications 8 à 11, **caractérisé en ce que** le caisson mural (53) présente un compartiment d'aspiration (55) sous le compartiment du dispositif d'écumage, lequel est formé avec un raccord de tuyau (57) pour un tuyau de pompe, sachant qu'entre le compartiment à filtre (13) et le compartiment d'aspiration (55), il est de préférence prévu une paroi perforée.

13. Dispositif d'écumage selon l'une des revendications 8 à 12, **caractérisé par** un couvercle de compartiment de dispositif d'écumage en matériau transparent.

14. Procédé d'exploitation d'un dispositif d'écumage (11) conformément à l'une des revendications précédentes, dans lequel les étapes suivantes sont exécutées :
a) Aspiration d'eau à travers un filtre (23) à l'aide d'une pompe,
b) Arrêt de la pompe pour le nettoyage du filtre (23),
c) Nettoyage du filtre (23)
**Caractérisé en ce que**
d) Lorsqu'un niveau d'eau bas est atteint par le capot flottant (31) du dispositif d'écumage (11), une arrivée d'eau est déclenchée

15. Procédé selon la revendication 14, **caractérisé en ce que** l'arrivée d'eau est stoppée lorsque le capot flottant (31) est relevé ou après l'alimentation en eau dans un délai prédéfini ou après approvisionnement d'une quantité d'eau prédéfinie.
